# EUROPÄISCHE PATENTSCHRIFT

(11) **EP 2 653 428 B1**
(45) Veröffentlichungstag und Bekanntmachung des Hinweises auf die Patenterteilung: **30.09.2015**
(21) Anmeldenummer: 13162691.3
(22) Anmeldetag: 08.04.2013
(51) Int. Cl.: B66D 5/14, B66C 13/46, B66D 5/30, G01B 3/10, B65H 75/48, B65H 75/44, B65H 61/00

(54) **Seillängengeber**
Wire-actuated linear encoder
Capteur de longueur de câble

(30) Priorität: 16.04.2012 DE 202012101380 U
(43) Veröffentlichungstag der Anmeldung: 23.10.2013
(73) Patentinhaber: Fernsteuergeräte Kurt Oelsch GmbH, 12347 Berlin (DE)
(72) Erfinder: Henkel, Mario, 12555 Berlin (DE)
(74) Vertreter: Willems, Volker

(56) Entgegenhaltungen:
- EP-A1- 0 440 246
- EP-A2- 0 982 562
- EP-A2- 0 994 327
- EP-A2- 1 014 031
- EP-A2- 1 014 032
- DE-A1- 3 019 190
- JP-U- H 031 191

## Beschreibung

### Technisches Gebiet

Die Erfindung betrifft einen Seillängengeber umfassend
a) ein Gehäuse und/oder Rahmen,
b) eine in dem Gehäuse und/oder Rahmen drehbar gelagerten Seiltrommel, auf welcher ein Messseil auf- und abwickelbar vorgesehen ist,
c) einen Drehratengeber, der die die Anzahl der Drehungen der Seiltrommel erfasst und
d) einen Rückstellantrieb für die Seiltrommel, welcher das abgewickelte Messseil wieder auf die Seiltrommel aufwickelt.

Weiterhin betrifft die Erfindung eine Wirbelstrombremse mit einer Statoreinheit und einer Rotoreinheit.

### Stand der Technik

Seillängengeber dienen beispielsweise zur Messung der Strecke, um welche der Ausleger eines Krans ausgefahren worden ist. Der Seillängengeber enthält ein Messseil, das auf eine Seiltrommel aufgewickelt ist. Die Seiltrommel ist in einem Seillängengeber-Gehäuse drehbar gelagert. Wenn das Messseil von der Seiltrommel abgezogen wird, dreht sich die Seiltrommel. Diese Drehung wird durch einen Sensor eines Drehratengebers gemessen. Sie liefert ein Maß für die von der Seiltrommel abgezogene Seillänge (DE 88 01 109.7 U; DE 297 07 252.6 U; DE 199 25 364 C2).

Der Seillängengeber wird in einem Referenzpunkt befestigt und das frei Ende des Messseils an einem gegenüber dem Referenzpunkt bewegten Teil angebracht. die abgezogene Seillänge liefert dann die Bewegung des bewegten Teils. Beispielsweise kann der Seillängengeber an einem stationären Teil eines Krans befestigt und das Ende des Messseils am Ende eines Kranauslegers angebracht sein. Dann kann durch das Signal des Seillängengebers die Ausfahrlänge des Kranauslegers überwacht werden. Die Seiltrommel steht unter dem Einfluss eines Rückstellmomentes, das z.B. von einem Federmotor aufgebracht werden kann. Das Messseil wird gegen dieses Rückstellmoment abgezogen.

Das Messseil wird über eine Seilführung reibungsarm aus dem Gehäuse des Seillängengebers herausgeführt. Diese Seilführung ist üblicherweise so ausgeführt, dass das Seil auch schräg aus dem Gehäuse abgezogen werden kann. Solche Seilführungen können eine Rollenführung mit zwei zueinander gekreuzt angeordneten Paaren von um das Messseil herum angeordneten Führungsrollen (DE 20 2004 007 424,9 U) aufweisen. Die Seilführung kann auch von einem mit einer Führungsbohrung versehenen Körper gebildet sein, der in einer sphärischen Lagerfläche allseitig schwenkbar gelagert ist.

Es sind ferner Wirbelstrombremsen bekannt. Bei der Wirbelstrombremse wird ein Bremsmoment durch eine Relativgeschwindigkeit zwischen einem stehenden und einem sich bewegenden Objekt erzeugt. Die Wirbelstrombremse arbeitet berührungslos und somit verschleißfrei. Physikalisch wird eine elektrisch leitende Scheibe in einem Magnetfeld bewegt, dabei werden Spannungen aufgrund von Wirbelströmen erzeugt, die ihrerseits ein Magnetfeld erzeugen, welches dem erzeugenden Feld entgegenwirkt. Das bewegte Objekt wird dadurch abgebremst. Dabei wird die Metallplatte zum Ohmschen Verbraucher, welcher die Bewegungsenergie in Wärme umsetzt. Die Stärke der Bremswirkung ist u.a. abhängig von der Leitfähigkeit der Metallplatte, der Relativgeschwindigkeit zwischen den bewegten Objekten, dem Abstand zwischen Magnetfeld und Metallscheibe, Richtung des Magnetfeldes. Das Bremsmoment ist nahezu linear zur Drehzahl.

Es sind ferner Wirbelstrombremsen bei Seilaufwicklungen bekannt. So offenbart beispielsweise die DE 602005002743 T2 ein Seilwickelsystem zum Auf- und Abwickeln eines Stahlseils eines Kranes. Das Seilwickelsystem umfasst eine Seiltrommel, auf die das Stahlseil in mehreren Lagen aufgewickelt ist. Ein als Wirbelstrombremse ausgebildetes Magnetsystem ist derart angeordnet, dass es um einen Seilabschnitt des Stahlseils ein Magnetfeld erzeugt, dessen magnetischer Fluss durch eine Bewegung des Stahlseils derartig ablenkt wird, dass das Stahlseil abgebremst wird. Diese Wirbelstrombremse wirkt zum Abbremsen dabei unmittelbar auf das Seil.

Bei den bekannten Seillängengebern tritt häufig das Problem auf, dass bei Seilriss oder bei Fehlbedienung des Seillängengebers, indem das Messseil schnappen gelassen wird. Eine Beschädigung des Geräts ist die Folge. Nicht selten kommt es dabei zum Totalausfall des Seillängengebers. Das Gerät muss dann ausgetauscht oder einer Totalreparatur unterzogen werden.

### Offenbarung der Erfindung

EP1014032A offenbart einen Seillängengeber gemäß dem Oberbegriff des Anspruchs 1.

Aufgabe der Erfindung ist es daher, Nachteile des Standes der Technik zu beseitigen und einen Seillängengeber zu schaffen, bei dem das Seil kontrolliert abgebremst werden kann. Erfindungsgemäß wird die Aufgabe durch einen Seillängengeber gemäß Anspruch 1 gelöst

Die Erfindung beruht auf dem Prinzip eine wirksame Bremse für einen Seillängengeber vorzusehen, der die Seiltrommel und damit auch das Seil bei einer Fehlfunktion bzw. Fehlbedienung abbremst. Durch die Wirbelstrombremse lässt sich die Seiltrommel wirksam und kontrolliert abbremsen. Die Wirbelstrombremse zeichnet sich zudem durch ihre Verschleißfreiheit aus. Da es bei der Wirbelstrombremse zu keiner Reibung kommt, findet dementsprechend auch kein mechanischer Verschleiß statt. Die Wirbelstrombremse ist somit sehr wartungsfreundlich und besonders wirksam. Bei der Wirbelstrombremse wird ein Bremsmoment durch eine Relativgeschwindigkeit zwischen dem stehenden und dem sich bewegenden Objekt erzeugt. Physikalisch wird ein elektrisch leitender Rotor in einem Magnetfeld bewegt. Dabei werden Spannungen aufgrund von Wirbelströmen erzeugt, die ihrerseits ein Magnetfeld erzeugen, welches dem erzeugenden Feld entgegenwirkt. Das bewegte Objekt wird dadurch abgebremst. Als vorteilhafte Ausgestaltung der Erfindung hat sich erwiesen, wenn die Wirbelstrombremse im Gehäuse und/oder Rahmen des Seillängengebers integriert ist. Dadurch wird eine kompakte Bauweise erreicht, die auch auf engem Raum eingesetzt werden kann. Die Integration der Wirbelstrombremse in dem Gehäuse bewirkt zudem, dass diese nicht verschmutzt. Häufig werden solche Bauteile nämlich bei Kränen, welche auf Baustellen verwendet werden, genutzt. Die Wirbelstrombremse wird somit durch das Gehäuse bzw. den Rahmen auch vor anderen äußeren Einflüssen geschützt.

In einer Ausbildung des erfindungsgemäßen Seillängengebers ist die Statoreinheit scheibenförmig ausgebildet, auf welcher als eine erste Variante wechselseitig gepolte Permanentmagnete ringförmig angeordnet sind. Diese Statoreinheit lässt sich auf einfachste Art realisieren. Die Permanentmagneten müssen nur in der richtigen Anordnung, d.h. ringförmig, auf der Statoreinheit angeordnet werden.

In einer weiteren Ausgestaltung des erfindungsgemäßen Seillängengebers ist die scheibenförmige Statoreinheit als eine zweite Variante mit sektorförmig angeordneten, mehrpoligen Ringmagneten vorgesehen. Diese Alternative der Statoreinheit ist besonders wirkungsvoll. Hierdurch wird eine besonders effektive Bremswirkung erreicht.

Vorzugsweise ist bei einer Ausbildung des erfindungsgemäßen Seillängengebers die scheibenförmige Statoreinheit der Wirbelstrombremse mit einem Gehäuse- und/oder Rahmenflansch verbunden. Die Statoreinheit kann auf diese Weise sehr einfach mit dem Gehäuse bzw. mit dem Rahmen verbunden, d.h. verschraubt werden, um ausreichende Festigkeit, welche für eine solche Wirbelstrombremse erforderlich ist, zu erhalten.
Eine Ausgestaltung des erfindungsgemäßen Seillängengebers ergibt sich ferner dadurch, dass die Rotereinheit eine Bremsscheibe enthält, welche an der Seiltrommel vorgesehen ist, wobei die Bremsscheibe senkrecht zu den Magnetfeldlinien der Permanentmagnete angeordnet ist. Damit ist die Bremsscheibe optimal zu den Permanentmagneten angeordnet, so dass eine sich maximale Bremsleistung erzielen lässt. Eine Ausführung der Bremsscheibe des erfindungsgemäßen Seillängengebers erhält man zudem dadurch, dass sie Kupferscheibe und eine Rückschlussplatte aus Weicheisen umfasst. Kupfer ist ein besonders guter Leiter. Daher eignet sich dieses Material besonders gut auf der Bremsscheibe, um dort Wirbelströme zu erzeugen. Diese Wirbelströme generieren schließlich das Magnetfeld, welches dem Magnetfeld der Permanentmagnete entgegenwirkt.

Grundsätzlich kann die Anordnung von Statoreinheit und Rotoreinheit selbstverständlich auch umgekehrt aufgebaut sein, was nicht Teil der Erfindung ist

Der Rotor enthält dann somit die Permanent- bzw. Ringmagnetenanordnung. Die Bremsscheibe ist in diesem Fall entsprechend statisch gegenüber dem Gehäuse bzw. Rahmen vorgesehen. Bei der Wirbelstrombremse kommt es nur auf die relative Bewegung der Bremsscheibe gegenüber den Magneten an.

In einem weiteren bevorzugten Aspekt ist bei dem erfindungsgemäßen Seillängengeber die Wirbelstrombremse in die Seilzugmechanik integriert. Mit dieser Maßnahme wird erreicht, dass die Wirbelstrombremse bestmöglich in den Seillängengeber zum Abbremsen integriert ist. Die Wirbelstrombremse greift bei einer Fehlfunktion oder einer Fehlbedienung unmittelbar in die Seilzugmechanik ein, so dass ein Schaden beispielsweise durch ein schnappendes Seil, verhindert werden kann.

Um die Wirkung der Wirbelstrombremse variabel zu halten, ist in einer bevorzugten Ausgestaltung des erfindungsgemäßen Seillängengebers der Abstand zwischen der Bremsscheibe und der scheibenförmigen Statoreinheit einstellbar vorgesehen. Der Abstand der Bremsscheibe zu den Permanentmagneten hat einen unmittelbaren Einfluss auf die Bremswirkung. Je größer der Abstand der Bremsscheibe ist, desto geringer ist auch die Bremswirkung. Umgekehrt steigt die Wirkung mit Abnahme des Abstands. Eine Regulierung des Bremsmoments über eine äußere Einstellmöglichkeit zur Veränderung des Luftspalts lässt sich so ermöglichen.

Bei einer Ausgestaltung einer Wirbelstrombremse, die nicht Teil der Erfindung ist, mit einer Stator- und einer Rotoreinheit, ist diese an einer drehbar gelagerten Welle einer Seiltrommel des Seillängengebers ankoppelbar ausgebildet. Auf diese Weise kann ein Seillängengeber mit einer Wirbelstrombremse schnell nachgerüstet werden. So kann jeder Seillängengeber, der über eine geeignete Kupplungsmöglichkeit verfügt, schnell mit einer Wirbelstrombremse nachgerüstet werden.

Ausgestaltungen und Vorteile der Erfindung ergeben sich aus dem Gegenstand der Unteransprüche. Ein Ausführungsbeispiel ist nachstehend unter Bezugnahme auf die beigefügten Zeichnungen näher erläutert.

### Kurze Beschreibung der Zeichnung

- Fig. 1: zeigt in einer perspektivischen Explosionszeichnung einen erfindungsgemäßen Seillängengeber mit integrierter Wirbelstrombremse.
- Fig. 2: zeigt in einer Seitenansicht mit teilweisem Schnitt einen erfindungsgemäßen Seillängengeber mit integrierter Wirbelstrombremse gemäß Fig.1.
- Fig. 3: zeigt einen Schnitt eines erfindungsgemäßen Seillängengebers mit integrierter Wirbelstrombremse gemäß Fig.1 bzw. Fig. 2.
- Fig. 4: zeigt in einer Seitenansicht mit teilweisem Schnitt eine Wirbelstrombremse für einen Seillängengeber.
- Fig. 5: zeigt einen Schnitt eine Wirbelstrombremse gemäß Fig. 4.
- Fig. 6: zeigt in einer Prinzipskizze einen Schnitt eine Wirbelstrombremse gemäß Fig. 4 bzw. Fig. 5.

### Bevorzugte Ausführungsbeispiele

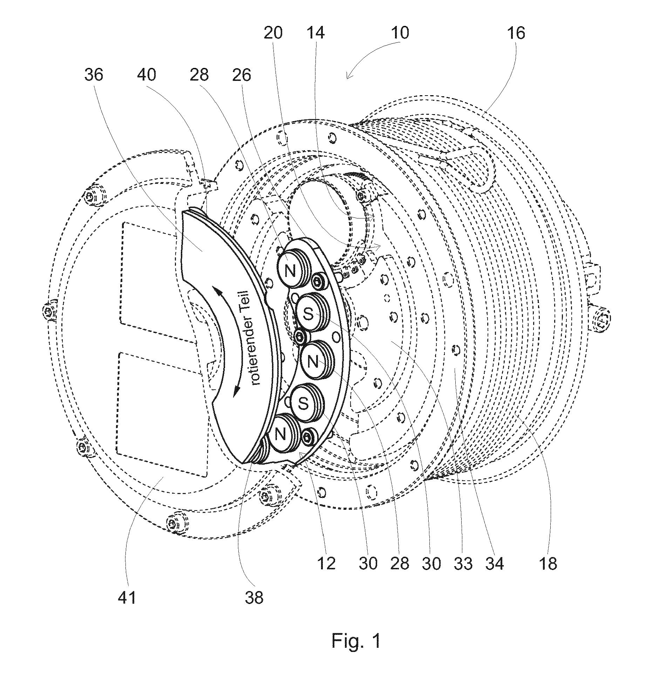

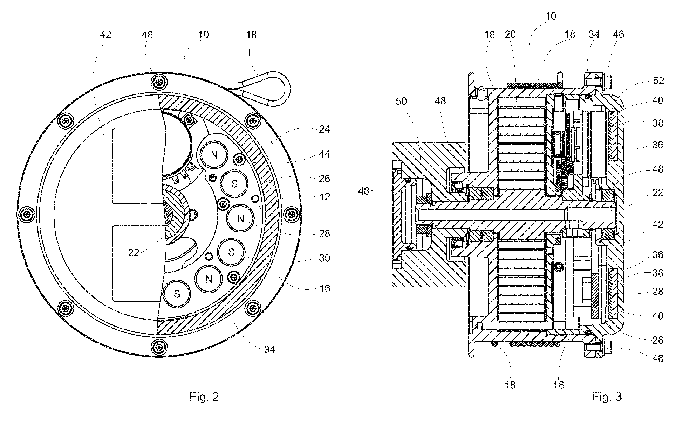

In Fig. 1 wird mit 10 ein Seillängengeber bezeichnet. Der Seillängengeber 10 ist in einer perspektivischen Explosionszeichnung schematisch dargestellt. Der Seillängengeber 10 enthält eine Wirbelstrombremse 12, welche in ein Gehäuse 14 des Seillängengebers 10 integriert ist. Auf einer Seiltrommel 16 ist ein Messseil 18 aufgewickelt. In dem Gehäuse 12 des Seillängengebers 10 ist ferner ein federbetriebener Rückstellantrieb 20 vorgesehen (siehe auch Fig. 3). Das Messseil 18 wird gegen die Federkraft des Rückstellantriebs 20 abgewickelt. Der Rückstellantrieb 20 wickelt das Messseil wieder auf die Seiltrommel 16 auf. Die Seiltrommel 16 ist in dem Gehäuse 14 mit einer Welle 22 drehbar gelagert.

An Stirnseite 24 der Seiltrommel 16 ist im Inneren eine ringförmige Rückschlussplatte 26 der Wirbelstrombremse 12 statisch befestigt. Die ringförmige Rückschlussplatte 26 ist im vorliegenden Ausführungsbeispiel so dimensioniert, dass sie in die Seiltrommel 16 passt (vgl. auch Fig. 2). An der Rückschlussplatte 26 sind Permanentmagnete 28, 30 ringförmig angeordnet. Die Permanentmagnete 28 wechseln sich in der Polarität mit den Permanentmagneten 30 ab. Bei den Permanentmagneten 28, 30 handelt es sich um Rundblockmagneten, die axial an der ringförmigen Rückschlussplatte 26 befestigt sind. Die Rückschlussplatte 26 bildet mit den daran angeordneten ringförmig angeordneten Permanentmagneten 28, 30 eine Statoreinheit 32 der Wirbelstrombremse 12, welche an einer Aufnahmeplatine 33 befestigt ist.

An einem Flansch 34 der Seiltrommel 16 ist eine kreisförmige Bremsscheibe 36 angeflanscht. Die Bremsscheibe 36 umfasst eine ringförmige Rückschlussplatte 38 aus Weicheisen. Der zu den Permanentmagneten 28, 30 zeigende Teil 40 der Bremsscheibe 36 besteht aus gut leitendem Material, wie Kupfer. Eine Abdeckkappe 42 schließt die Stirnseite 24 der Seiltrommel 16 ab.

Fig. 2 zeigt in einer Seitenansicht mit teilweisem Schnitt den Seillängengeber 10 mit integrierter Wirbelstrombremse 12 entsprechend dem von Fig.1. Die Abdeckkappe 42 und die Bremsscheibe 36 sind in etwa zur Hälfte weggebrochen dargestellt, so dass hier die Statoreinheit 32 sichtbar wird. Die Statoreinheit 32 ist innerhalb der Seiltrommel 16 des Seillängengebers 10 angeordnet. Dazu ist sie mit Schrauben 44 an der Aufnahmeplatine fixiert. Die Abdeckkappe 42 ist mit Schrauben 46 an dem Flansch 34 verschraubt, um die ganze Mechanik des Seillängengebers 10 vor äußeren Einflüssen zu schützen.

Fig. 3 zeigt einen schematischen Längsschnitt des Seillängengebers 10 mit der integrierten Wirbelstrombremse 12. Dieser Seillängengeber 10 entspricht den Abbildungen gemäß Fig.1 bzw. Fig. 2. Für gleiche Bestandteile werden daher auch jeweils sich entsprechende Bezugszeichen verwendet. Auf der Seiltrommel 16 ist das Messseil 18 aufgerollt. Das Messseil 18 kann gegen die Federkraft des Rückstellantriebs 20 abgezogen werden. Die Seiltrommel 16 sitzt fest auf der Welle 22, welche drehbar in Lagern 48 im Gehäuse 14 gelagert ist. Die Seiltrommel 16 rotiert mit der Welle 22 beim Abziehen und Aufwickeln des Messseils 18. Die Welle 22 des Seillängengebers 10 ragt in einen Drehratengeber 50, welcher die Umdrehungen der Welle 22 und damit der Seiltrommel 16 ermittelt. Der Drehratengeber 50 liefert Signale und/oder Werte, welche der Umdrehung der Seiltrommel 16 entsprechen. Aus dem Umfang der Seiltrommel 16 kann so die Länge des abgewickelten bzw. aufgewickelten Messseils 18 rechnerisch ermittelt werden.

Die Wirbelstrombremse 12 befindet sich auf der dem Drehratengeber 50 gegenüberliegenden Seite. An dem Flansch 34 der Seiltrommel 16 ist die kreisförmige Bremsscheibe 36 angeflanscht. Im Schnitt sind die Komponenten der Bremsscheibe 36 gut zu sehen: Einerseits die ringförmige Rückschlussplatte 38 aus Weicheisen und andererseits Teil 40 der Bremsscheibe 36 aus Kupfer. Die Abdeckkappe 42 schließt die Stirnseite 24 der Seiltrommel 16 ab. Die Bremsscheibe 36 bildet eine Rotoreinheit 52, welche sich mit der Welle 22 und der Abdeckkappe 42 dreht. Die Bremsscheibe 36 ist senkrecht zu den Magnetfeldern der Permanentmagnete 28, 30 angeordnet. Zwischen Statoreinheit 32 und der Rotoreinheit 52 besteht ein Luftspalt 54. Dieser Luftspalt 54 ist variable ausgestaltet, indem der Abstand zwischen der Rotoreinheit 52 und der Statoreinheit 32 einstellbar ausgebildet ist. Damit kann die Bremswirkung verändert werden.

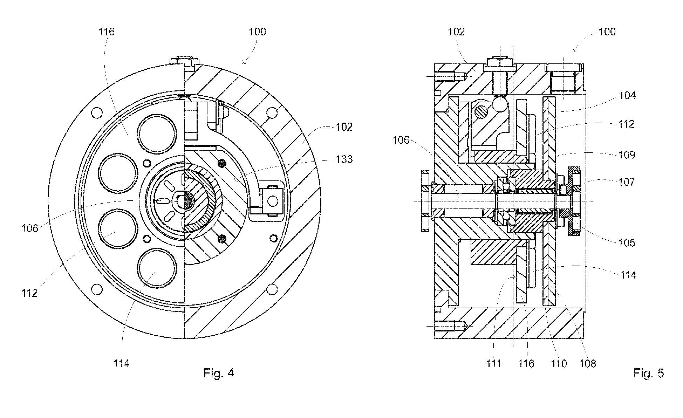

Fig. 4 zeigt in einer Seitenansicht mit teilweisem Schnitt eine andockbare Wirbelstrombremse 100 für einen Seillängengeber. Die Wirbelstrombremse 100 weist ein Gehäuse 102 auf, in dem eine Bremsscheibe 104 mit einer Welle 106 drehbar gelagert ist. Die Welle 106 ist mittels einer Kupplung 105 mit der Welle eines Seillängengebers fest verbunden (siehe Fig. 5). Im vorliegenden Ausführungsbeispiel besteht die Kupplung 105 aus Flanschen 107. Prinzipiell kann die Welle des Seillängengebers auch selbst verwendet werden. Diese ragt dann bspw. aus dem Gehäuse 102 des Seillängengebers heraus und wird in das Gehäuse 102 der andockbaren Wirbelstrombremse 100 hineingeführt.

Die Welle 106 ist mit der Bremsscheibe 104 fest verbunden. Die Bremsscheibe 104 besteht aus zwei Komponenten, einer Rückschlussplatte 108 aus Weicheisen und einer ringförmigen Kupferscheibe 110 (siehe Fig. 5). Die Bremsscheibe 104 bildet Rotoreinheit 109 der Wirbelstrombremse 100. Die Rotoreinheit 109 ist in Fig. 4 nicht dargestellt und nur in Fig. 5 sichtbar. Allerdings ist eine Teilansicht einer Statoreinheit 111 gezeigt. Die Statoreinheit 111 wird von Permanentmagneten 112, 114 und einer Rückschlussplatte 116 aus Weicheisen gebildet. Die Statoreinheit 111 ist auf einer Aufnahmeplatine 133 fixiert. Die Permanentmagnete 112, 114 sind ringförmig auf der Rückschlussplatte 116 angeordnet. Bei den Permanentmagneten 112, 114 handelt es sich um Rundblockmagneten, die axial auf der Rückschlussplatte 116 befestigt sind. Dabei wechselt sich die Polarität der Permanentmagnete 112 mit der Polarität der Permanentmagnete 114 ab.

Fig. 5 zeigt einen Längsschnitt der erfindungsgemäßen Wirbelstrombremse 100 gemäß Fig. 4. Für gleiche Bestandteile werden daher auch jeweils sich entsprechende Bezugszeichen verwendet. Die Wirbelstrombremse 100 befindet sich in dem Gehäuse 102. Die Welle 106 ist quer durch das Gehäuse 102 geführt und darin drehbar gelagert. Mit der Kupplung 105 kann die Wirbelstrombremse 100 an den Seillängengeber angedockt werden. Eine Rotation der Welle des Seillängengebers wird über die Kupplung 105 unmittelbar auf die Welle 106 übertragen, an der auch die Bremsscheibe 104 fest sitzt. Die Statoreinheit 111 ist im Inneren des Gehäuses 102 fixiert.

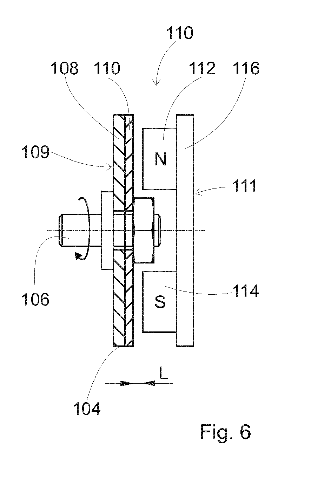

Zwischen der Statoreinheit 111 und der Rotoreinheit 109 ist ein einstellbarer Abstand L (siehe Fig. 6) vorgesehen, mit dem die Wirkung der andockbaren Wirbelstrombremse 100 einstellbar ist. Die rotierende Bremsscheibe 104 befindet sich weitestgehend senkrecht zu den Magnetfeldlinien der Permanentmagnete 112, 114. Hier wird zudem deutlich, dass die Bremsscheibe 104 aus der ringförmigen Rückschlussplatte 108 aus Weicheisen und einer der ringförmigen Kupferscheibe 110 besteht. Bei der Statoreinheit 111 sitzen die Permanentmagneten 112 und 114 auf der Rückschlussplatte 116.

Fig. 6 zeigt in einer vereinfachten Prinzipskizze einen Schnitt einer Wirbelstrombremse 100, wie sie bspw. gemäß Fig. 4 bzw. Fig. 5 dargestellt ist. Die Bremsscheibe 104 ist auf der drehbar gelagerten Welle 106 befestigt. Diese bildet die Rotoreinheit 109 der Wirbelstrombremse 100. Die Bremsscheibe 104 ist in einem Abstand L zu den ringförmig angeordneten Permanentmagneten 112, 114 der Statoreinheit 111 angeordnet. Bei der Statoreinheit 111 wird auch die ringförmige Rückschlussplatte 116 erkennbar, auf welcher die als Rundblockmagneten ausgebildeten Permanentmagneten 112, 114 befestigt sind.

Die Funktionsweise sei wie folgt anhand der Fig. 6 kurz erläutert: Bei der Wirbelstrombremse 100 wird das Bremsmoment durch die Relativgeschwindigkeit zwischen der Statoreinheit 111 stehenden und der bewegenden Rotoreinheit 109 generiert. Die Wirbelstrombremse 100 arbeitet dabei berührungslos und somit verschleißfrei. Die elektrisch leitende Bremsscheibe 104 wird in dem Magnetfeld der Permanentmagneten 112, 114 bewegt. Dabei werden Spannungen aufgrund von Wirbelströmen erzeugt. Diese erzeugen ihrerseits wiederum ein Magnetfeld, welches dem erzeugenden Feld entgegenwirkt. Die bewegte Bremsscheibe 104 wird dadurch abgebremst. Die wird Bewegungsenergie wird dabei in Wärme umgewandelt. Die Stärke der Bremswirkung ist insbesondere von der Leitfähigkeit der Bremsscheibe 104 abhängig. Auch die Relativgeschwindigkeit zwischen der bewegten Rotoreinheit 109 und der Statoreinheit 111 spielt dabei neben dem Abstand L zwischen dem Magnetfeld der Permanentmagneten 112, 114 und der Bremsscheibe eine Rolle. Ferner hat die Richtung des Magnetfeldes einen Einfluss auf die Bremswirkung. Das Bremsmoment ist nahezu linear zur Drehzahl der Bremsscheibe 104.

Wird das Messseil 18 des Seillängengebers 10 unkontrolliert durch den Rückstellantrieb aufwickelt, weil es bspw. gerissen ist, dann rotiert die Bremsscheibe 36 mit entsprechender Geschwindigkeit in dem Magnetfeld der statisch angeordneten Permanentmagnete 28, 30. In der Bremsscheibe 26 werden Wirbelströme erzeugt, welche das entgegenwirkende Magnetfeld generieren, welches die Bremsscheibe 26 samt Seiltrommel 16 kontrolliert abbremst.

## Patentansprüche

1. Seillängengeber (10) umfassend
a) ein Gehäuse (14) und/oder Rahmen,
b) eine in dem Gehäuse (14) und/oder Rahmen drehbar gelagerten Seiltrommel (16), auf welcher ein Messseil (18) auf- und abwickelbar vorgesehen ist,
c) einen Drehratengeber (50), der die Anzahl der Drehungen der Seiltrommel (16) erfasst und
d) einen Rückstellantrieb (20) für die Seiltrommel (16), welcher das abgewickelte Messseil wieder auf die Seiltrommel aufwickelt,
e) eine Wirbelstrombremse (12) zum Abbremsen der Seiltrommel (16) bei Fehlern, insbesondere bei Fehlfunktion und/oder Fehlbedienung, wobei die Wirbelstrombremse (12) eine Statoreinheit (32) und eine Rotoreinheit (52) aufweist,
f) wobei die Statoreinheit (32) scheibenförmig ausgebildet ist, auf welcher wechselseitig gepolte Permanentmagnete (28, 30) ringförmig angeordnet sind,
oder wobei die scheibenförmige Statoreinheit (32) mit sektorförmig angeordneten, mehrpoligen Ringmagneten vorgesehen ist,
g) die Rotereinheit (52) eine Bremsscheibe (36) enthält, welche an der Seiltrommel (16) vorgesehen ist, wobei die Bremsscheibe (36) senkrecht zu den Magnetfeldlinien der Permanentmagnete (28, 30) angeordnet ist,
**dadurch gekennzeichnet, dass**
h) die Bremsscheibe (36) eine Kupferscheibe und eine Rückschlussplatte (38) aus Weicheisen umfasst.

2. Seillängengeber (10) nach Anspruch 1, **dadurch gekennzeichnet, dass** die Wirbelstrombremse (12) im Gehäuse (14) und/oder Rahmen des Seillängengebers (10) integriert ist.

3. Seillängengeber (10) nach einem der Ansprüche 1 bis 4, **dadurch gekennzeichnet, dass** die scheibenförmige Statoreinheit (32) der Wirbelstrombremse (12) mit einem Gehäuse- und/oder Rahmenflansch verbunden ist.

4. Seillängengeber (10) nach einem der vorherigen Ansprüche, **dadurch gekennzeichnet, dass** die Wirbelstrombremse (12) in die Seilzugmechanik integriert ist.

5. Seillängengeber (10) nach einem der vorherigen Ansprüche, **dadurch gekennzeichnet, dass** der Abstand (L) zwischen der Bremsscheibe (36) und der scheibenförmige Statoreinheit (32) einstellbar vorgesehen ist.

## Claims

1. A rope length transmitter (10) comprising
a) a housing (14) and / or frame,
b) a rope drum (16) pivotally mounted in the housing (14) and / or frame, on which a windable and unwindable measuring rope (18) is provided,
c) an angular rate sensor (50) which detects the number of rotations of the rope drum (16) and
d) a return drive (20) for the rope drum (16) which winds up the unwound measuring rope back to the rope drum,
e) an eddy current brake (12) for braking the rope drum (16) in case of errors, in particular in case of malfunction and / or operating error, wherein the eddy current brake (12) comprises a stator unit (32) and a rotor unit (52),
f) wherein the stator unit (32) is disc-shaped, on which reciprocally poled permanent magnets (28, 30) are arranged ring-like, or wherein the disc-shaped stator unit is provided with sector-like arranged multipolar ring magnets,
g) the rotor unit (52) comprises a brake disc (36) which is provided at the rope drum (16), wherein the brake disc (36) is arrange perpendicular to the magnetic field lines of the permanent magnets (28, 30),
**characterized in that**
h) the brake disk (36) comprises a copper plate and a yoke plate (38) made of soft iron.

2. A rope length transmitter (10) according to claim 1, **characterized in that** the eddy current brake (12) is integrated in the housing (14) and / or the frame of the rope length transmitter (10).

3. A rope length transmitter (10) according to any one of claims 1 to 4, **characterized in that** the disk-shaped stator unit (32) of the eddy current brake (12) is connected to a housing and / or flame flange.

4. A rope length transmitter (10) according to any one of the preceding claims, **characterized in that** the eddy current brake (12) is integrated in the rope drive mechanism.

5. A rope length transmitter (10) according to any one of the preceding claims, **characterized in that** the distance (L) between the brake disc (36) and the disk-shaped stator unit (32) is provided adjustable.

## Revendications

1. Transmetteur de longueur de câble (10) comprenant
(a) un bâti (14) et/ou un cadre,
(b) un tambour de câble (16) logé de manière à tourner dans le bâti (14) et/ou le cadre et sur lequel est prévu un élément de mesure (18) de sorte à pouvoir être enroulé et déroulé,
(c) un capteur de taux de rotation (50) qui saisit le nombre de tours du tambour de câble (16) et
(d) un enrouleur automatique (20) pour le tambour de câble qui enroule l'élément de mesure déroulé sur le tambour de câble,
(e) un frein à courant de Foucault (12) destiné à freiner le tambour de câble (16) en cas de défauts, notamment en cas de défaut fonctionnel et/ou de défaut de commande, le frein à courant de Foucault (12) présentant un élément fixe (32) et un élément tournant (52),
(f) l'élément fixe (32) étant configuré sous forme de disque sur lequel sont disposés circulairement des aimants permanents (28, 30) polarisés en alternance ou
l'élément fixe (32) en forme de disque étant prévu avec des aimants annulaires multipolaires disposés en forme de secteur,
(g) l'élément tournant (52) comprend un disque de frein (36) prévu sur le tambour de câble (16), le disque de frein (36) étant disposé perpendiculairement aux lignes de champ magnétique des aimants permanents (28, 30),
**caractérise en ce que**
(h) le disque de frein (36) comprend un disque en cuivre et une planque métallique (38) en fer doux.

2. Transmetteur de longueur de câble (10) selon la revendication 1, **caractérisé en ce que** le frein à courant de Foucault (12) est intégré dans le bâti (14) et/ou le cadre du transmetteur de longueur de câble (10).

3. Transmetteur de longueur de câble (10) selon l'une des revendications 1 à 4, **caractérisé en ce que** l'élément fixe (32) en forme de disque du frein à courant de Foucault (12) est relié à une bride de bâti et/ou de cadre.

4. Transmetteur de longueur de câble (10) selon l'une des revendications précédentes, **caractérisé en ce que** le frein à courant de Foucault (12) est intégré dans le mécanisme de treuil.

5. Transmetteur de longueur de câble (10) selon l'une des revendications 1 à 4, **caractérisé en ce que** l'écart (L) entre le disque de frein (36) et l'élément fixe (32) en forme de disque est prévu de sorte à pouvoir être réglé.
